# DEMANDE DE BREVET EUROPEEN

(11) **EP 2 743 107 A1**
(43) Date de publication de la demande: **18.06.2014**
(21) Numéro de dépôt: 13196996.6
(22) Date de dépôt: 12.12.2013
(51) Int. Cl.: B60H 1/00

(54) **Circuit et procédé de conditionnement d'air, notamment pour véhicule automobile**

(30) Priorité: 14.12.2012 FR 1262064
(71) Demandeur: VALEO SYSTEMES THERMIQUES, 78320 Le Mesnil Saint-Denis (FR)
(72) Inventeur: Thuez, Jean-Luc, 78112 FOURQUEUX (FR)
(74) Mandataire: Pellegrini, Marie Claude

(57) **Abrégé**

L'invention concerne un circuit et un procédé de conditionnement d'air, notamment pour véhicule automobile. Le circuit (7) comprend un compresseur (11) d'un fluide frigorigène, un premier échangeur de chaleur (13) du fluide frigorigène situé dans un compartiment (9) du véhicule pour échanger de la chaleur avec un premier flux d'air F1, et un deuxième et troisième échangeurs de chaleur (15, 17) du fluide frigorigène disposés dans un boîtier de conditionnement d'air (3) du véhicule pour échanger de la chaleur avec un second flux d'air F2, ledit circuit de conditionnement (7) comprenant au moins deux branches (19, 21), reliées en parallèle l'une de l'autre depuis une sortie (27) du compresseur (11), chacune desdites branches (19, 21) comprenant un desdits échangeurs de chaleur (13, 15, 17), ces branches (19, 21) étant configurées pour définir une ou plusieurs boucles de circulation du fluide frigorigène avec le compresseur (11), ledit circuit (7) étant configuré pour qu'au moins l'un des échangeurs (13,15,17) présente un mode de fonctionnement différent de celui des autres échangeurs parmi au moins un mode de fonctionnement en condenseur, un mode de fonctionnement en évaporateur et un mode de fonctionnement dans lequel l'échangeur est fermé à la circulation du fluide frigorigène.

## Description

### Domaine technique de l'invention.

L'invention concerne un circuit et un procédé de conditionnement d'air, notamment pour véhicule automobile. Elle concerne également une installation de conditionnement d'air, notamment pour la ventilation, le chauffage et/ou la climatisation d'un habitacle d'un véhicule automobile comprenant un tel circuit de conditionnement d'air.

### Etat de la technique.

On connaît par le document US 2010/0326127 un dispositif de conditionnement d'air pour véhicule automobile permettant de chauffer l'habitacle au moyen d'une pompe à chaleur et dont le cadre d'application est étendu à des applications de dégivrage et déshumidification, y compris à de basses températures de l'environnement extérieur. Ce dispositif utilise un circuit de climatisation comprenant un premier échangeur de face avant de véhicule et un second et troisième échangeurs situés dans un boitier de conditionnement d'air de l'habitacle. Il présente un inconvénient en terme de modularité de fonctionnement des échangeurs en ce sens que le fluide frigorigène parcourt toujours le même échangeur en sortie de compresseur.

Un tel circuit de climatisation peut être amélioré et il est proposé en ce sens un circuit de conditionnement d'air, notamment pour véhicule automobile, comprenant un compresseur d'un fluide frigorigène, un premier échangeur de chaleur du fluide frigorigène situé dans un compartiment du véhicule, en particulier un compartiment moteur et/ou de face avant, pour échanger de la chaleur avec un premier flux d'air, et un deuxième et troisième échangeurs de chaleur du fluide frigorigène disposés dans un boîtier de conditionnement d'air du véhicule pour échanger de la chaleur avec un second flux d'air, ledit circuit de conditionnement comprenant au moins deux branches, reliées en parallèle l'une de l'autre depuis une sortie du compresseur, chacune desdites branches comprenant un desdits échangeurs de chaleur, ces branches étant configurées pour définir une ou plusieurs boucles de circulation du fluide frigorigène avec le compresseur, ledit circuit étant configuré pour qu'au moins l'un des échangeurs présente un mode de fonctionnement différent de celui des autres échangeurs parmi au moins un mode de fonctionnement en condenseur, un mode de fonctionnement en évaporateur et un mode de fonctionnement dans lequel l'échangeur est fermé à la circulation du fluide frigorigène.

Autrement dit, le circuit procède d'une architecture de branches de circuit en parallèle sur le compresseur, ce qui permet en disposant des composants adéquats sur le circuit, tels que vannes, détendeurs, réservoirs de liquide frigorigène ou autres, de configurer le circuit pour associer l'un des échangeurs à un ou deux autres desdits échangeurs du circuit, dans une liberté de fonction de chacun des échangeurs, notamment à la sortie du compresseur, et donc d'obtenir de multiples possibilités de fonctionnement du circuit, notamment de refroidissement, chauffage, déshumidification de l'habitacle et/ou dégivrage d'un échangeur du véhicule équipé.

On entend par branches reliées en parallèle des branches distinctes connectées par leur extrémité à des noeuds communs du circuit de sorte que le fluide puisse circuler en parallèle dans lesdites branches. Autrement dit, le ou les échangeurs de l'une desdites branches ne sont pas en série avec le ou les échangeurs de l'autre desdites branches.

Notamment, relativement au circuit de conditionnement d'air décrit par le document US 2010/0326127 précité, où l'un des échangeurs du boîtier de conditionnement est en fonctionnement permanent, le circuit de conditionnement d'air proposé ne limite pas le fonctionnement d'un échangeur à un mode de fonctionnement donné. La réversibilité de fonctionnement de chacun desdits échangeurs de chaleur est permise, ce qui ajoute au nombre des diverses possibilités de fonctionnement du circuit.

Avantageusement, ledit circuit est configuré pour associer un desdits échangeurs à l'un et/ou l'autre desdits échangeurs.

Avantageusement, une première desdites branches comporte ledit premier échangeur et l'autre ou seconde branche comporte ledit deuxième échangeur, ce deuxième échangeur étant destiné à fonctionner en condenseur du fluide frigorigène.

Avantageusement, ledit circuit est configuré de façon à autoriser un contournement dudit second échangeur, par exemple en fonction du positionnement d'un volet, par ledit second flux d'air.

Avantageusement, la première et la seconde branches se rejoignent en une branche d'alimentation du troisième échangeur.

Avantageusement, ledit circuit comporte une première réserve de fluide frigorigène disposée à la jonction desdites deux branches, en particulier côté haute pression du circuit, à l'opposé du compresseur. Cette réserve de fluide est plus particulièrement destinée à réaliser une fonction, dite de bouteille, du circuit frigorigène. Autrement dit, ladite réserve est destinée constituer un volume tampon de fluide frigorigène et/ou à séparer les phases liquide et gazeuse dudit fluide frigorigène, côté haute pression du circuit frigorigène. Ladite bouteille est reliée à une branche de circuit menant audit troisième échangeur.

Ledit circuit comprend avantageusement une deuxième réserve de fluide frigorigène, dite accumulateur, menant à l'entrée du compresseur. Ladite bouteille pourra être reliée audit premier échangeur, en particulier par une vanne trois voies.

Les deux réserves de liquide sont ainsi disposées sur chacune des parties hautes pression et basse pression du circuit.

Ladite vanne trois voies est notamment configurée pour ouvrir le passage du fluide frigorigène dudit premier échangeur à l'entrée du compresseur lorsque ledit premier échangeur fonctionne en évaporateur et du compresseur vers le premier échangeur lorsque ce dernier fonctionne en condenseur.

Le circuit comporte avantageusement une première vanne deux voies disposée sur ladite première branche comprenant ledit premier échangeur, entre ledit premier échangeur et ladite branche d'alimentation du troisième échangeur, ladite vanne permettant d'ouvrir ou fermer la circulation du fluide frigorigène dans ladite première branche.

Le circuit comporte avantageusement une seconde vanne deux voies disposée dans ladite branche d'alimentation du troisième échangeur, ladite vanne permettant d'ouvrir ou fermer la circulation du fluide frigorigène dans ladite branche d'alimentation du troisième échangeur.

Le circuit comporte avantageusement un premier organe de détente du fluide frigorigène, monté en parallèle d'une vanne anti retour en sortie du premier échangeur relativement à un sens de parcours du fluide frigorigène depuis le compresseur, ledit organe de détente étant disposé à l'entrée du premier échangeur relativement au sens de parcours du fluide frigorigène dans un mode de fonctionnement en évaporateur dudit premier échangeur.

Le circuit comporte avantageusement un second organe de détente du fluide frigorigène, monté sur la branche d'alimentation du troisième échangeur, ledit organe de détente étant disposé à l'entrée du troisième échangeur relativement au sens de parcours du fluide frigorigène dans un mode de fonctionnement en évaporateur dudit troisième échangeur.

En outre, il peut être utile de prévoir une vanne d'arrêt dans la deuxième branche et/ou un capillaire pour réaliser une perte de charge « artificielle » en sortie du deuxième échangeur, ce qui favorise la circulation du liquide issu du condenseur.

Cela étant, ledit circuit pourra aussi être associé à un autre circuit d'échange de chaleur à l'aide un échangeur, dit tri-therme, par exemple dans le but de chauffer ou refroidir une batterie, notamment pour les véhicules électriques ou hybrides.

Ledit échangeur tri-therme est avantageusement configuré pour assurer un échange de chaleur entre un liquide caloporteur d'un circuit de refroidissement/chauffage de la batterie et le fluide frigorigène.

Ledit échangeur tri-therme comporte avantageusement une première branche formant évaporateur pour le fluide frigorigène, une seconde branche formant condenseur pour le fluide frigorigène et une troisième branche reliée au circuit de liquide caloporteur du circuit de refroidissement/chauffage de la batterie.

Ladite première branche de l'échangeur tri- therme est reliée à ladite branche d'alimentation du troisième échangeur, en parallèle de cette dernière, de part et d'autre dudit troisième échangeur et/ou ladite seconde branche de l'échangeur tri-therme est intégrée à ladite autre branche du circuit, en sortie dudit deuxième échangeur, selon la circulation du fluide frigorigène.

Le circuit de conditionnement d'air, tel que décrit ci-dessus, comporte de nombreuses possibilités de fonctionnement qui sont à choisir selon les circonstances et les exigences de confort des personnes dans l'habitacle du véhicule.

L'invention concerne d'ailleurs également un procédé de conditionnement d'air, notamment pour véhicule automobile, au moyen d'un circuit de conditionnement d'air comprenant un compresseur d'un fluide frigorigène, un premier échangeur de chaleur du fluide frigorigène situé dans un compartiment du véhicule pour l'échange de chaleur avec un premier flux, et un deuxième et troisième échangeurs de chaleur du fluide frigorigène disposés dans un boîtier de conditionnement d'air du véhicule pour échanger de la chaleur avec un second flux d'air, ledit circuit comprenant au moins deux branches, reliées en parallèle l'une de l'autre depuis une sortie du compresseur, chacune desdites branches comprenant un desdits échangeurs de chaleur, procédé dans lequel on fait fonctionner lesdits échangeurs de chaleur selon une ou plusieurs boucles de circulation du fluide frigorigène avec le compresseur, au moins l'un des échangeurs présentant un mode de fonctionnement différent de celui des autres échangeurs parmi au moins un mode de fonctionnement en condenseur, un mode de fonctionnement en évaporateur et un mode de fonctionnement dans lequel l'échangeur est fermé à la circulation du fluide frigorigène.

Selon divers modes de réalisation de l'invention qui peuvent être pris ensemble ou séparément :
- on associe l'un desdits échangeurs à l'un et/ou l'autre desdits échangeurs,
- on prévoit dans une desdites branches de circuit ledit premier échangeur et dans l'autre branche de circuit ledit deuxième échangeur, ce deuxième échangeur fonctionnant en condenseur du fluide frigorigène,
- pour réaliser un mode de climatisation, dit principal, ledit troisième échangeur fonctionne en évaporateur, ledit deuxième échangeur fonctionne en condenseur, et ledit premier échangeur fonctionne en condenseur, la circulation du second flux d'air à travers ledit second échangeur étant bloquée,
- dans ledit mode de climatisation principal un volet est positionné en regard du deuxième échangeur de manière à masquer l'effet d'apport de chaleur de ce condenseur,
- pour réaliser un premier mode de déshumidification de l'air de l'habitacle et de ses parois, relativement audit mode de climatisation principal, on autorise la circulation du second flux d'air à travers ledit second échangeur, notamment par l'ouverture dudit volet,
- pour réaliser un deuxième mode de déshumidification de l'air de l'habitacle et de ses parois, ledit deuxième échangeur fonctionne en condenseur, et ledit premier échangeur fonctionne en évaporateur, ledit troisième échangeur fonctionnant en évaporateur,
- pour réaliser un mode de fonctionnement en pompe à chaleur, le second échangeur fonctionne en condenseur, ledit second échangeur étant associé en série au premier échangeur fonctionnant en évaporateur, la circulation du fluide frigorigène dans ledit troisième échangeur étant fermée,
- dans un mode de fonctionnement permettant un chauffage de l'habitacle sur l'air recyclé de ce dernier, le second échangeur fonctionne en condenseur en étant associé en série au troisième échangeur fonctionnant en évaporateur, la circulation du fluide frigorigène dans ledit premier échangeur étant fermée.

Dans le cas de la présence dans le circuit d'un échangeur tri-therme tel que celui décrit plus haut, on fait avantageusement fonctionner lesdits échangeurs de chaleur et lesdites première et deuxième branches de l'échangeur tri-therme, selon une ou plusieurs boucles de circulation du fluide frigorigène avec le compresseur.

Selon cet aspect de l'invention, on pourra rencontrer les caractéristiques suivantes, prises ensemble ou séparément :
- dans un premier mode de fonctionnement tri-therme, on ferme l'autre branche du circuit à la circulation du fluide frigorigène, notamment à l'aide de la vanne deux voies correspondante, et ledit premier échangeur fonctionne en condenseur en association avec ladite première branche de l'échangeur tri-therme,
- dans un deuxième mode de fonctionnement tri-therme, on ferme l'autre branche du circuit à la circulation du fluide frigorigène et ledit premier échangeur fonctionne en condenseur en association avec la première branche de l'échangeur tri-therme, ledit troisième échangeur fonctionnant en évaporateur.
- dans un troisième mode de fonctionnement tri-therme, on ferme la branche d'alimentation du troisième échangeur et de même la première branche de l'échangeur tri-therme, notamment par la fermeture de leur vanne deux voies d'alimentation, et on ouvre ladite autre branche du circuit à la circulation du fluide frigorigène, notamment au moyen de sa vanne deux voies, ledit deuxième échangeur fonctionnant en condenseur, la sortie de ce dernier alimentant la seconde branche de l'échangeur tri-therme, la sortie duquel mène audit premier échangeur fonctionnant en évaporateur,
- dans un quatrième mode de fonctionnement tri-therme, on ouvre la branche d'alimentation du troisième échangeur, on ferme la première branche de l'échangeur tri-therme, on ferme la première branche du circuit et on ouvre l'autre branche du circuit à la circulation du fluide frigorigène, notamment par l'ouverture ou la fermeture de leur vannes deux voies d'alimentation pour alimenter le deuxième échangeur en condenseur et la seconde branche de l'échangeur tri-therme,
- dans un cinquième mode de fonctionnement tri-therme, on ouvre l'autre branche du circuit pour alimenter en fluide frigorigène ledit deuxième fonctionnant échangeur en condenseur et alimenter la seconde branche de l'échangeur tri-therme, ledit premier échangeur fonctionnant en évaporateur, la branche d'alimentation du troisième échangeur étant fermée et la première branche de l'échangeur tri-therme étant ouverte pour sortir vers le compresseur,
- dans un sixième mode de fonctionnement tri-therme, notamment dans le cas de températures extérieures négatives, on fait fonctionner le premier échangeur en condenseur, le troisième échangeur étant fermé et l'autre branche du circuit étant ouverte à la circulation du fluide frigorigène pour alimenter ledit deuxième échangeur fonctionnant en condenseur, le circuit étant bouclé par la première branche de l'échangeur tri-therme pour revenir au compresseur.
- dans ledit sixième mode de fonctionnement tri-therme, on ouvre partiellement la seconde branche à la circulation du fluide frigorigène en vue de faire fonctionner le deuxième échangeur en condenseur et maintenir le chauffage dans l'habitacle.

Ledit circuit de climatisation est avantageusement configuré pour fonctionner selon l'un et/ou les autres desdits modes de fonctionnement décrit plus haut.

L'invention concerne également une installation de conditionnement d'air comprenant un circuit de conditionnement d'air tel que décrit ci-dessus.

Ladite installation de conditionnement d'air peut comprendre également un boîtier de conditionnement d'air de véhicule, au moins un circuit de conditionnement d'air, tel que décrit ci-dessus, au moins une source de ventilation d'air dudit boîtier de conditionnement d'air et, éventuellement, dudit compartiment du véhicule pour échanger de la chaleur avec le premier flux d'air, une ou des sources de chauffage et/ou de climatisation auxiliaires mettant en oeuvre et/ou complétant les fonctions de refroidissement, chauffage et déshumidification de l'habitacle et/ou dégivrage d'un échangeur du véhicule équipé.

### Description des figures.

La présente invention sera mieux comprise à la lecture de la description qui va être faite d'exemples de modes de réalisation de l'invention, en relation avec les figures des planches annexées, dans lesquelles :
Les figures 1 à 5 sont des vues schématiques d'un premier circuit de conditionnement d'air conforme à l'invention, dans divers modes de fonctionnement.
Les figures 6 à 10 sont des vues schématiques d'un second circuit de conditionnement d'air conforme à l'invention, dans divers modes de fonctionnement.

Dans la description qui suit, des références identiques sont utilisées pour désigner des éléments analogues ou identiques.

Comme illustré aux différentes figures, l'invention concerne un circuit et un procédé de conditionnement d'air.

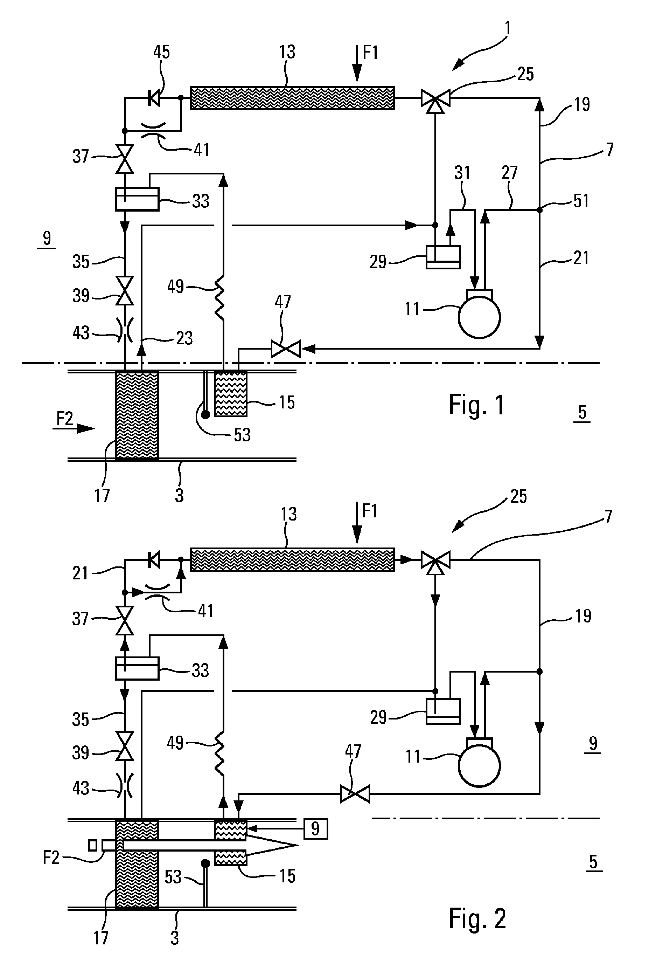

Un véhicule automobile est généralement équipé d'une installation 1 de ventilation, de chauffage et/ou de climatisation, tel que représenté à la figure 1, pour modifier la température et l'humidité de l'air contenu à l'intérieur de l'habitacle. L'installation 1 comporte ici un boîtier 3 en matière plastique disposé sous une planche de bord du véhicule. Le boîtier 3 est destiné à délivrer de l'air conditionné à l'intérieur de l'habitacle 5.

L'installation 1 coopère avec le circuit de conditionnement d'air 7, ici de climatisation de l'habitacle, à l'intérieur duquel circule un fluide réfrigérant, dans un sens de circulation indiqué par les flèches représentées sur le dessin.

Le circuit de conditionnement d'air 7 est destiné à être disposé en partie dans un compartiment de face avant 9 du véhicule automobile et en partie dans ledit boîtier de conditionnement d'air 3 de l'habitacle du véhicule automobile.

Le compartiment de face avant 9 du véhicule automobile reçoit par la calandre avant non représentée un flux d'air F1.

Le boîtier 3 reçoit un flux d'air F2 qu'il répartit en tant qu'air de conditionnement dans l'habitacle 5 du véhicule automobile.

Ledit circuit de conditionnement 7 comprend un compresseur 11 du fluide frigorigène, un premier échangeur de chaleur 13 du fluide frigorigène situé dans le compartiment de face avant 9 du véhicule pour échanger de la chaleur avec le premier flux d'air F1, et un deuxième et troisième échangeurs de chaleur, respectivement 15, 17, du fluide frigorigène disposés dans ledit boîtier de conditionnement d'air 3 pour échanger de la chaleur avec le second flux d'air F2. Dans ledit boîtier 3, le troisième 17 et le second échangeur 15 sont positionnés dans cet ordre selon le sens de circulation du flux d'air.

Lesdits échangeurs de chaleur 13, 15, 17 pourront être configurés pour fonctionner en évaporateur ou en condenseur du fluide frigorigène. Au moins l'un des échangeurs fonctionne de façon différente de celle des autres échangeurs. Dans le cas présent, seul l'échangeur 13 est prévu pour fonctionner en évaporateur ou en condenseur.

Ledit circuit de conditionnement 7 comprend au moins deux branches 19, 21, reliées en parallèle l'une de l'autre depuis une sortie du compresseur 11, chacune desdites branches 19, 21 comprenant un desdits échangeurs de chaleur 13, 15. Ces branches 19, 21 sont configurées pour définir une ou plusieurs boucles de circulation du fluide frigorigène avec le compresseur 11.

Une première 19 desdites branches comporte ledit premier échangeur 13 et l'autre ou seconde branche 21 comporte ledit deuxième échangeur 15. Ce deuxième échangeur 15 est ici destiné à fonctionner en condenseur du fluide frigorigène. Le troisième échangeur 17 est de son côté destiné à fonctionner en évaporateur.

Ledit premier échangeur 13 est de fonctionnement réversible, en condenseur ou évaporateur du fluide frigorigène, comme déjà mentionné.

La première et l'autre branches 19, 21 se rejoignent en une branche 35 d'alimentation du troisième échangeur 17.

Une première réserve de fluide frigorigène 33 est disposée à la jonction desdites deux branches 19, 21. Cette réserve de fluide 33 réalise plus particulièrement une fonction dite de bouteille du circuit frigorigène, séparant les phases liquide et gazeuse du fluide frigorigène. Cette réserve de fluide 33 est reliée à la branche de circuit 35 menant au troisième échangeur 17. La second branche 21 débouche en partie haute de ladite bouteille 33 tandis que la première branche débouche en partie basse de celle-ci de façon à se trouver sous le niveau de la phase liquide, en tenant compte des variations de niveau possibles. La branche 35 d'alimentation du troisième échangeur débouche dans le fond de ladite bouteille 33.

Le premier échangeur 13 est ici relié par une vanne trois voies 25, en sortie 27 de compresseur, à une deuxième réserve 29 de fluide frigorigène, dite accumulateur, menant à l'entrée 31 du compresseur 11, côté basse pression du circuit.

Ladite vanne trois voies 25 est configurée pour ouvrir le passage du fluide frigorigène dudit premier échangeur 13 à l'entrée 31 du compresseur 11 lorsque ce premier échangeur 13 fonctionne en évaporateur et du compresseur 11 vers l'échangeur 13 lorsque ce dernier fonctionne en condenseur. Elle est ainsi également sur ladite première branche 19.

Les deux réserves de liquide 29, 33 sont dans ce cas disposées sur chacune des parties haute pression et basse pression du circuit.

Le circuit 7 comporte encore deux vannes deux voies 37, 39 disposées de part et d'autre de la réserve de liquide 33 ou bouteille du circuit, l'une 37 desdites vannes deux voies étant disposée sur ladite première branche 19 et l'autre 39 dans la branche de circuit 35 menant au troisième échangeur 17. Ces vannes 37, 39 permettent d'ouvrir ou fermer la circulation du fluide frigorigène dans chacune des desdites branche 19 et 35.

Le circuit 7 comporte ici deux organes de détente 41, 43 du fluide frigorigène, l'un 41 monté en parallèle d'une vanne anti retour 45, entre ladite bouteille 33 et ledit premier échangeur 13, et l'autre 43 sur la branche de circuit 35 menant au troisième échangeur 17, entre ladite bouteille 33 et ledit troisième échangeur 17. La vanne anti retour 45 peut être remplacée par un clapet.

Ces organes de détente 41, 43 sont avantageusement disposés respectivement à l'entrée du premier échangeur 13 et à l'entrée du troisième échangeur 17 relativement au sens de parcours du fluide frigorigène lorsqu'ils fonctionnent en mode évaporateur.

En outre, il est prévu une vanne d'arrêt 47 sur l'autre branche 21 et/ou un capillaire 49 pour réaliser une perte de charge « artificielle » en sortie de l'échangeur 15 destiné à fonctionner en condenseur, ce qui favorise la circulation du fluide frigorigène en phase liquide, issu du condenseur 15.

Les diverses possibilités de fonctionnement du circuit 7 sont à présent décrites en référence aux figures 1 à 5 successivement.

Un mode de climatisation principal réalisé par ledit circuit 7 est illustré dans la figure 1. Dans ce mode, le troisième échangeur 17 fonctionne en évaporateur, le deuxième échangeur 15 fonctionne en condenseur, et le premier échangeur 13 fonctionne en condenseur, la circulation du second flux d'air F2 à travers ledit second échangeur 15 étant bloquée.

Ainsi, le fluide frigorigène comprimé par le compresseur 11, circulant dans le circuit selon les flèches, est partagé en sortie 27 de ce dernier en un point de jonction 51 desdites branches 19, 21. Le fluide est alors dirigé dans la branche 19 de compartiment de face avant 9 du véhicule ou première branche et dans la branche 21 menant au boîtier de conditionnement d'air 3 ou deuxième branche.

Dans la première branche 19 le fluide sous forme de gaz à haute pression est acheminé par la vanne trois voies 25 au dit premier échangeur 13, lequel fonctionne en condenseur. Le fluide parcourt alors le condenseur et passe de phase gazeuse en phase liquide tandis qu'il échange de la chaleur avec le flux d'air F1 de face avant du véhicule. Le fluide sort du condenseur par la vanne anti retour 45 pour parvenir par la vanne deux voies 37 à la réserve de fluide 33.

Dans la deuxième branche 21, le fluide sous forme de gaz à haute pression est acheminé au dit second échangeur 15 fonctionnant aussi en condenseur. Un volet articulé 53 relevé pour former masque du condenseur bloque la circulation du second flux d'air F2 à travers ce second échangeur 15. Le fluide sort du condenseur 15 par le capillaire 49 et parvient à la réserve de fluide 33 ou bouteille.

Le fluide dans son cheminement vers une pression plus basse sort alors de la réserve de fluide 33 par la branche de circuit 35 pour parvenir à l'organe de détente 43 via la vanne deux voies 39. Il traverse alors l'échangeur 17, lequel fonctionne en mode évaporateur. Le fluide frigorigène échange alors de la chaleur avec le flux d'air F2, lequel est alors refroidi. Le fluide frigorigène sort de l'évaporateur 17 pour être acheminé à la seconde réserve de fluide 29 ou accumulateur d'où il retourne au compresseur 11.

Ainsi, les deux premier et second échangeurs 13, 15, montés en parallèles, fonctionnent en condenseur et sont associés en série au troisième échangeur 17 qui fonctionne en évaporateur, lequel évaporateur produit du froid dans le boîtier de conditionnement 3 du véhicule. Le volet 53 positionné en regard du condenseur 15 de boîtier de conditionnement permet de masquer l'effet d'apport de chaleur de ce condenseur. Le capillaire 49 monté sur la branche 21 en sortie du condenseur de boîtier de conditionnement freine la circulation du fluide frigorigène dans cette branche et favorise la circulation du fluide en phase liquide, dans la branche.

Un mode possible pour la déshumidification de l'air de l'habitacle 5 et de ses parois est celui représenté à la figure 2 où, relativement au mode de climatisation principal, on autorise la circulation du second flux d'air F2 à travers ledit second échangeur 15. Le volet 53 du second échangeur 15 est ouvert. Ledit échangeur 15 fonctionnant en condenseur produit alors sur le flux d'air F2 de la chaleur en parallèle du froid produit par l'échangeur 17 fonctionnant en évaporateur 17, ce qui déshumidifie l'air pulsé F2.

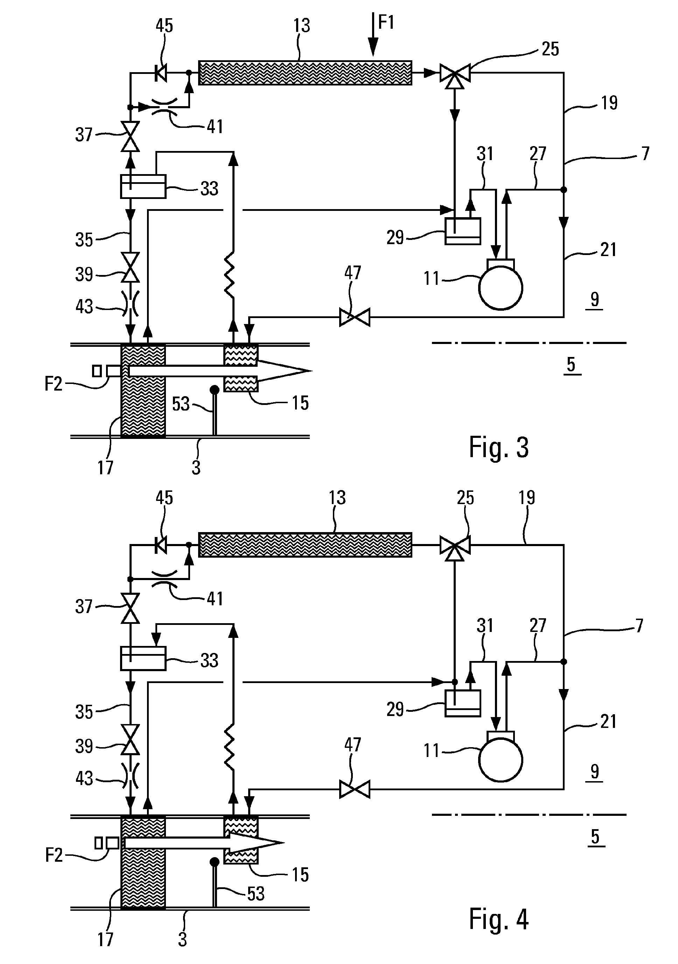

Un autre mode de déshumidification représenté à la figure 3 est celui où le deuxième échangeur 15 fonctionne en condenseur, le volet 53 du condenseur étant ouvert. La vanne trois voies 25 ferme l'accès du fluide frigorigène comprimé dans partie de la première branche 19 située entre la sortie du compresseur 11 et ladite vanne trois voies 25. Le fluide traverse ainsi le deuxième échangeur 15 fonctionnant en condenseur et est acheminé via la réserve de fluide 33 ou bouteille vers le premier échangeur 13 de la branche 19 en passant par l'organe de détente 41 à son entrée. Cet échangeur 13 fonctionne alors en évaporateur. Le fluide est également acheminé depuis la dite réserve de fluide 33 vers le troisième échangeur 17 via la vanne deux voies 39 et l'organe de détente 43 dans la branche de circuit correspondante 35. Cet échangeur 17 fonctionne alors en évaporateur. Dans ce cas, il se produit dans le boîtier de conditionnement simultanément du froid par l'évaporateur 17 et de la chaleur par le condenseur 15, la production de chaleur par le condenseur 15 étant maximale en raison de son association à deux évaporateurs 13 et 17.

D'autres modes de fonctionnement concernent l'utilisation de deux échangeurs parmi les trois du circuit, l'un fonctionnant en condenseur et l'autre en évaporateur.

Un exemple d'un tel mode de fonctionnement est représenté à la figure 4 où l'échangeur 15 fonctionnant en condenseur est mis en série avec le troisième échangeur fonctionnant en évaporateur 17 selon les flèches indiquées de circulation du fluide frigorigène dans le circuit. La circulation du fluide frigorigène dans le premier échangeur 13 est fermée via la vanne deux voies 37. Ce mode permet notamment un chauffage de l'habitacle sur l'air recyclé de ce dernier en permettant en outre d'éviter le givrage du premier échangeur 13 en cas de température extérieure basse.

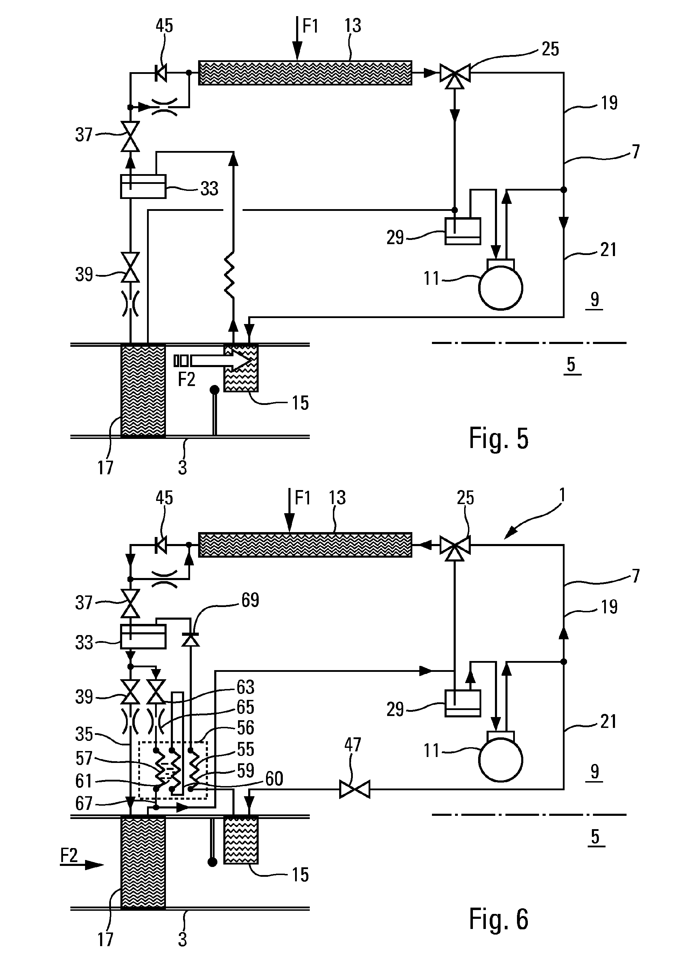

Un autre exemple est représenté à la figure 5 où l'échangeur 15 de la deuxième branche 21 fonctionne en condenseur et celui 13 de la première branche 19 fonctionne en évaporateur, la circulation du fluide frigorigène étant fermée dans le troisième échangeur 17 via la vanne 39. Dans ce cas, le circuit fonctionne tel une pompe à chaleur sur l'air extérieur, prélevant de la chaleur sur l'air en face avant et la transférant dans le boîtier de conditionnement 3.

Selon un second circuit de conditionnement d'air conforme à l'invention et représenté aux figures 6 à 10, le circuit 7 est associé à un autre circuit d'échange de chaleur, par exemple il comprend un échangeur 56 dit tri-therme d'un circuit de refroidissement de la batterie du véhicule, dans le but de chauffer ou refroidir la batterie, notamment pour les véhicules électriques ou hybrides. La batterie de ces véhicules doit en effet être maintenue dans une plage de température moyenne déterminée pour bien fonctionner et des températures au delà de cette plage peuvent la détériorer.

Cet échangeur tri-therme 56 comporte une première branche formant évaporateur 57, une seconde branche formant condenseur 59 et une troisième branche 60 reliée au circuit de refroidissement 56 de la batterie contenant un liquide caloporteur. Ledit échangeur tri-therme est configuré pour réaliser un échange de chaleur entre le liquide caloporteur et le fluide frigorigène circulant dans chacune des première et/ou seconde branches.

Ladite première branche formant évaporateur 57 est ici alimentée par une vanne deux voies 63 et un organe de détente 65, en parallèle de la branche de circuit 35 menant au troisième échangeur 17, avec une entrée et une sortie 67 sur de part et d'autre dudit troisième échangeur 17. Cette sortie 67 mène au compresseur 11 via la réserve de liquide 29.

Ladite seconde branche formant condenseur 59 est dans l'exemple alimentée en sortie du second échangeur 15 avec une sortie reliée à la réserve de fluide frigorigène 33, côté haute pression, par une vanne anti retour 69 ou un autre organe anti retour, tel qu'un clapet.

Divers modes de fonctionnement de ce circuit de conditionnement 7 sont décrits ci après.

Un premier mode de fonctionnement est représenté à la figure 6. Dans ce mode, la première branche 21 du circuit est fermée à la circulation du fluide frigorigène au moyen de la vanne deux voies correspondante 47 et ledit premier échangeur 13 est alimenté en condenseur en association avec la branche évaporateur 57 de l'échangeur tri-therme. Le troisième échangeur 17 fonctionne également en évaporateur. Le fluide frigorigène passe ainsi dans le premier échangeur 13 de face avant, fonctionnant en condenseur, sort dans la réserve 33 ou bouteille par la vanne ou organe anti retour 45 et la vanne deux voies 37 de la première branche, puis ressort en parallèle dans le troisième échangeur 17, fonctionnant en évaporateur, et dans la branche formant évaporateur 57, d'où il retourne à la réserve de fluide 29 ou accumulateur pour être à nouveau comprimé par le compresseur 11. Ce mode permet de refroidir l'habitacle 5 et le fluide caloporteur de la batterie.

Dans une variante de mode de fonctionnement non représentée, la seconde branche 21 du circuit est fermée à la circulation du liquide frigorigène au moyen de la vanne deux voies correspondante 47 et ledit premier échangeur 13 est alimenté en condenseur en association en série avec la branche évaporateur 57 de l'échangeur tri-therme. Le troisième échangeur 17 est fermé à la circulation du fluide frigorigène par l'intermédiaire de la vanne 39. Ce mode assure un refroidissement maximal de la batterie, par exemple lors de sa recharge.

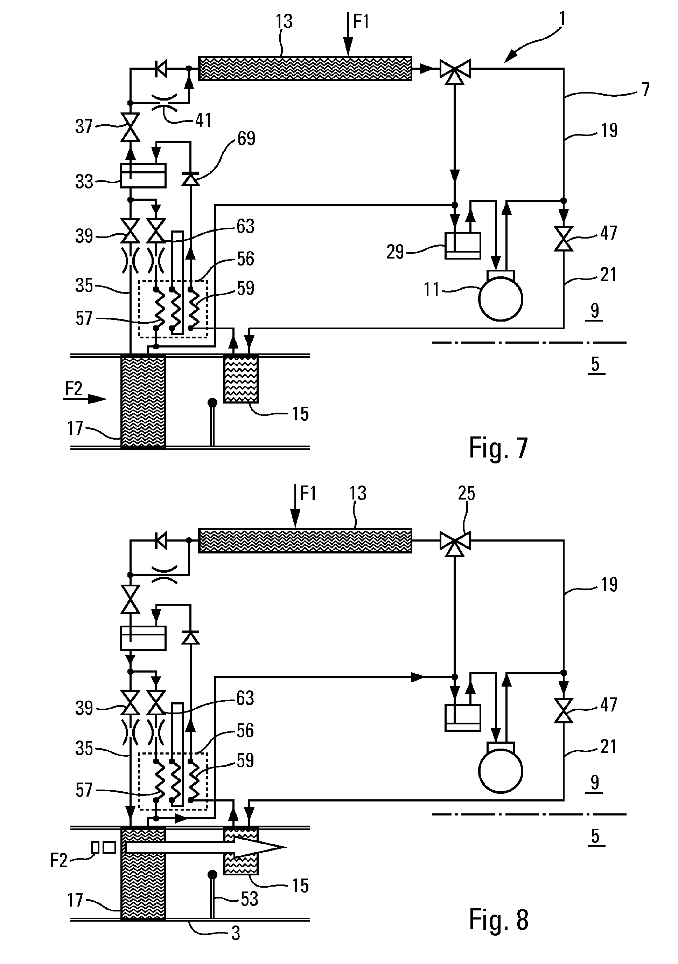

Un autre mode de fonctionnement illustré à la figure 7 est celui dans lequel la branche de circuit 35 d'alimentation du troisième échangeur 17 est fermée à la circulation du fluide frigorigène et de même la branche évaporateur 57 de l'échangeur tri-therme, par la fermeture de leur vanne deux voies d'alimentation 39 et 63. La seconde branche 21 est ouverte au moyen de la vanne deux voies 47 et l'échangeur 15 de cette branche fonctionne en condenseur. Par suite, la sortie de ce dernier alimente la branche condenseur 59 de l'échangeur tri-therme. La sortie de cette branche condenseur 59 mène audit premier échangeur 13, fonctionnant en évaporateur, le fluide passant par la vanne anti retour 69 à l'entrée de la réserve de fluide 33, dans ladite réserve de fluide 33, dans la vanne deux voies 37 et l'organe de détente 41 de la première branche avant de traverser le premier échangeur 13, fonctionnant en évaporateur. En sortie dudit premier échangeur 13, le fluide retourne à la réserve de fluide ou accumulateur 29 puis au compresseur 11. Dans ce mode, on réchauffe simultanément l'habitacle 5 et la batterie. De plus, on réalise une augmentation du sous refroidissement du fluide frigorigène dans la dite branche condenseur 59 de l'échangeur tri-therme dans son parcours vers l'évaporateur 13.

Un autre mode de fonctionnement est représenté à la figure 8. Dans ce mode, la branche de circuit 35 est d'alimentation du troisième échangeur 17 est ouverte à la circulation du fluide frigorigène, la branche évaporateur 57 de l'échangeur tri-therme est fermée, la première branche 19 du circuit est également fermée, et la seconde branche 21 du circuit est ouverte, par l'ouverture ou la fermeture de leur vanne d'alimentation 39, 63, 37 et 47. Dans ce mode, l'échangeur 15 fonctionnant en condenseur et la branche condenseur 59 de l'échangeur tri-therme sont associés en série au troisième échangeur 17 fonctionnant en évaporateur. De son côté, le volet 53 est ouvert. Ce mode permet le chauffage de l'habitacle 5 sur l'air recyclé F2 et d'un élément relié sur un circuit glycol, tel le circuit de refroidissement 56 de batterie.

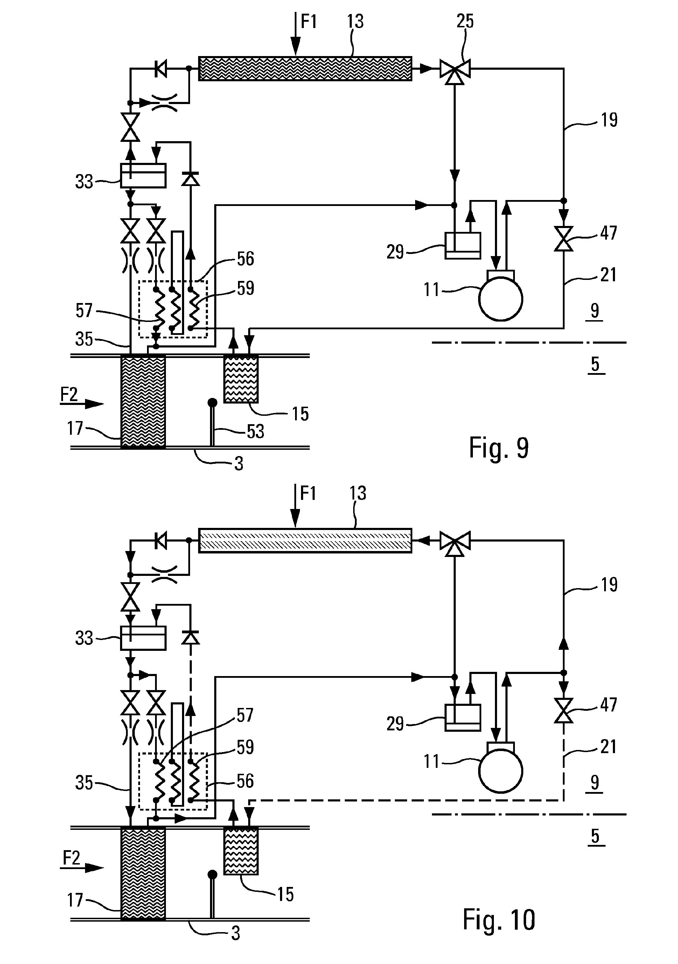

Un autre mode de fonctionnement représenté à la figure 9 est celui dans lequel on ouvre la seconde branche 21 du circuit 21 pour alimenter en fluide frigorigène l'échangeur 15 de cette branche, fonctionnant en condenseur, et la branche condenseur 59 de l'échangeur tri-therme. On alimente également le premier échangeur 13 en évaporateur, on ferme la branche 35 du circuit alimentant le troisième échangeur 17 et on ouvre la branche évaporateur 57 de l'échangeur tri-therme pour ressortir vers le compresseur 11. Ce mode peut être utile pour le dégivrage de l'échangeur 13 de face avant lorsque la température extérieure est proche de 0°C. En effet, la partie évaporateur 57 de l'échangeur tri-therme, du fait de la masse de la batterie et de sa température, plus élevée que celle extérieure, participe à l'élévation de pression dans le premier échangeur 13 donc à une fonction d'évaporateur à température plus élevée. Le dégivrage dudit premier échangeur 13 est ainsi favorisé tout en permettant le chauffage de l'habitacle 5.

Ce mode de dégivrage de l'échangeur 13 de face avant peut être complété d'un autre mode illustré à la figure 10, notamment dans le cas de températures extérieures négatives, où relativement au mode précédent, on réalise une circulation du fluide frigorigène en sens inverse dans le premier échangeur 13, lequel fonctionne alors en condenseur. Le circuit est bouclé par la branche évaporateur 57 de l'échangeur tri-therme pour revenir au compresseur 11. Comme précédemment, la masse de la batterie 56 et sa température, en fonctionnement, permet de la solliciter thermiquement sans l'affecter. On peut également ouvrir la seconde branche 21 (en trait interrompu), par la vanne deux voies 47 en sortie de compresseur 11, pour faire fonctionner le deuxième échangeur 15 en condenseur afin de maintenir le chauffage dans l'habitacle 5.

Ledit fluide réfrigérant pourra être, par exemple, le fluide connu sous le nom de R134a ou R1234yf. Il est à noter que dans le cas de l'utilisation d'un réfrigérant supercritique, tel que le « R744 » ou le CO2 le ou lesdits échangeurs du circuit fonctionnant en condenseur selon les explications données plus haut fonctionne alors plutôt en refroidisseur de gaz.

L'invention apporte ainsi un dispositif et un procédé de conditionnement d'air, notamment pour véhicule automobile, qui offre de larges possibilités de fonctionnement pour s'adapter aux conditions extérieures et exigences de confort des personnes dans l'habitacle du véhicule ainsi que pour réaliser une régulation thermique de la batterie du véhicule.

## Revendications

1. Circuit de conditionnement d'air (7), notamment pour véhicule automobile, comprenant un compresseur (11) d'un fluide frigorigène, un premier échangeur de chaleur (13) du fluide frigorigène situé dans un compartiment (9) du véhicule pour échanger de la chaleur avec un premier flux d'air F1, et un deuxième et troisième échangeurs de chaleur (15, 17) du fluide frigorigène disposés dans un boîtier de conditionnement d'air (3) du véhicule pour échanger de la chaleur avec un second flux d'air F2, ledit circuit de conditionnement (7) comprenant au moins deux branches (19, 21), reliées en parallèle l'une de l'autre depuis une sortie (27) du compresseur (11), chacune desdites branches (19, 21) comprenant un desdits échangeurs de chaleur (13, 15, 17), ces branches (19, 21) étant configurées pour définir une ou plusieurs boucles de circulation du fluide frigorigène avec le compresseur (11), ledit circuit (7) étant configuré pour qu'au moins l'un des échangeurs (13,15,17) présente un mode de fonctionnement différent de celui des autres échangeurs parmi au moins un mode de fonctionnement en condenseur, un mode de fonctionnement en évaporateur et un mode de fonctionnement dans lequel l'échangeur est fermé à la circulation du fluide frigorigène.

2. Circuit de conditionnement d'air (7), selon la revendication 1, dans lequel une première (19) desdites branches comporte ledit premier échangeur (13) et l'autre branche (21) comporte ledit deuxième échangeur (15), ce deuxième échangeur (15) étant destiné à fonctionner en condenseur du fluide frigorigène.

3. Circuit de conditionnement d'air (7), selon la revendication 2, dans lequel la première et l'autre branches (19, 21) se rejoignent en une branche (35) d'alimentation du troisième échangeur (17).

4. Circuit de conditionnement d'air (7), selon l'une quelconque des revendications précédentes, dans lequel ledit circuit comporte une première réserve de fluide frigorigène (33) disposée à la jonction desdites deux branches (19, 21),

5. Circuit de conditionnement d'air (7), selon l'une quelconque des revendications précédentes, comprenant une deuxième réserve de fluide frigorigène (29), dite accumulateur, menant à l'entrée (31) du compresseur.

6. Circuit de conditionnement d'air (7), selon l'une quelconque des revendications précédentes, comportant un premier organe de détente (41) du fluide frigorigène, monté en parallèle d'une vanne anti retour (45) en sortie du premier échangeur (13) relativement à un sens de parcours du fluide frigorigène depuis le compresseur (11), ledit organe de détente (41) étant disposé à l'entrée du premier échangeur (13) relativement au sens de parcours du fluide frigorigène dans un mode de fonctionnement en évaporateur dudit premier échangeur.

7. Circuit de conditionnement d'air (7), selon la revendication 6, comportant un second organe de détente (43) du fluide frigorigène, monté sur la branche (35) d'alimentation du troisième échangeur, ledit organe de détente (43) étant disposé à l'entrée du troisième échangeur (17) relativement au sens de parcours du fluide frigorigène dans une mode de fonctionnement en évaporateur dudit troisième échangeur.

8. Circuit de conditionnement d'air (7), selon l'une quelconque des revendications précédentes, comprenant un échangeur (55) dit tri-therme, destiné à chauffer ou refroidir une batterie, notamment pour les véhicules électriques ou hybrides, ledit échangeur tri-therme (55) étant configuré pour assurer un échange de chaleur entre un liquide caloporteur d'un circuit de refroidissement (56) de la batterie et le fluide frigorigène.

9. Circuit de conditionnement d'air (7) selon la revendication 8, dans lequel ledit échangeur tri-therme (55) comporte une première branche formant évaporateur (57) pour le fluide frigorigène, une seconde branche formant condenseur (59) pour le fluide frigorigène et une troisième branche (60) reliée au circuit de refroidissement (56) de la batterie.

10. Circuit de conditionnement d'air (7) selon la revendication 9, dans lequel ladite première branche (57) de l'échangeur tri-therme est reliée à ladite branche (35) d'alimentation du troisième échangeur, et/ou en parallèle de cette dernière, de part et d'autre dudit troisième échangeur (17) et/ou ladite seconde branche (59) de l'échangeur tri-therme est intégrée à ladite autre branche (21) du circuit, en sortie dudit deuxième échangeur (15) selon la circulation du fluide frigorigène.

11. Procédé de conditionnement d'air, notamment pour véhicule automobile, au moyen d'un circuit de conditionnement d'air (7) comprenant un compresseur (11) d'un fluide frigorigène, un premier échangeur de chaleur (13) du fluide frigorigène situé dans un compartiment (9) du véhicule pour l'échange de chaleur avec un premier flux F1, et un deuxième et troisième échangeurs de chaleur (15, 17) du fluide frigorigène disposés dans un boîtier de conditionnement d'air (3) du véhicule pour échanger de la chaleur avec un second flux d'air F2, ledit circuit (7) comprenant au moins deux branches (19, 21), reliées en parallèle l'une de l'autre depuis une sortie (27) du compresseur (11), chacune desdites branches (19, 21) comprenant un desdits échangeurs de chaleur (13, 15, 17), procédé dans lequel on fait fonctionner lesdits échangeurs de chaleur (13,15,17) selon une ou plusieurs boucles de circulation du fluide frigorigène avec le compresseur (11), au moins l'un des échangeurs (13,15,17) présentant un mode de fonctionnement différent de celui des autres échangeurs parmi au moins un mode de fonctionnement en condenseur, un mode de fonctionnement en évaporateur et un mode de fonctionnement dans lequel l'échangeur est fermé à la circulation du fluide frigorigène.

12. Procédé de conditionnement d'air selon la revendication 11, dans lequel on associe l'un desdits échangeurs (13, 15, 17) à l'un et/ou l'autres desdits échangeurs (13, 15, 17).

13. Procédé de conditionnement d'air selon la revendication 11 ou 12, dans lequel on prévoit dans une (19) desdites branches ledit premier échangeur (13) et dans l'autre branche (21) ledit deuxième échangeur (15), ce deuxième échangeur (15) fonctionnant en condenseur du fluide frigorigène.

14. Procédé de conditionnement d'air selon l'une des revendications 11 à 13, dans lequel, pour réaliser un mode de climatisation, dit principal, ledit troisième échangeur (17) fonctionne en évaporateur, ledit deuxième échangeur (15) fonctionne en condenseur, et ledit premier échangeur (13) fonctionne en condenseur, la circulation du second flux d'air F2 à travers ledit second échangeur (15) étant bloquée.

15. Procédé de conditionnement d'air selon la revendication 14, dans lequel, pour réaliser un premier mode de déshumidification de l'air de l'habitacle (5) et de ses parois, relativement audit mode de climatisation principal, on autorise la circulation du second flux d'air F2 à travers ledit second échangeur (15).

16. Procédé de conditionnement d'air selon la revendication 11, dans lequel pour réaliser un deuxième mode de déshumidification de l'air de l'habitacle (5) et de ses parois, ledit deuxième échangeur (15) fonctionne en condenseur, et ledit premier échangeur (13) fonctionne en évaporateur, ledit troisième échangeur (17) fonctionnant en évaporateur.

17. Procédé de conditionnement d'air selon la revendication 11, dans lequel, dans un mode de fonctionnement, le second échangeur (15) fonctionne en condenseur, étant associé en série au troisième échangeur (17) fonctionnant en évaporateur, la circulation du fluide frigorigène dans le premier échangeur (13) étant fermée.

18. Procédé de conditionnement d'air selon la revendication 11, dans lequel, dans un mode de fonctionnement, ledit deuxième échangeur (15) fonctionne en condenseur, en étant associé audit premier échangeur (13) fonctionnant en évaporateur, la circulation du fluide frigorigène dans ledit troisième échangeur (17) étant fermée.

19. Procédé de conditionnement d'air selon la revendication 11, dans lequel ledit circuit de conditionnement d'air (7) comprenant en outre un échangeur (55) dit tri-therme de batterie destiné à chauffer ou refroidir une batterie, notamment pour les véhicules électriques ou hybrides, ledit échangeur tri-therme (55) étant configuré pour assurer un échange de chaleur entre un liquide caloporteur d'un circuit de refroidissement (56) de la batterie et le fluide frigorigène, ledit échangeur tri-therme (55) comportant une première branche formant évaporateur (57), une seconde branche formant condenseur (59) et une troisième branche (60) reliée au circuit de refroidissement (56) de la batterie, ladite première branche (57) de l'échangeur tri-therme étant reliée à une branche d'alimentation (35) du troisième échangeur, en parallèle de cette dernière, de part et d'autre dudit troisième échangeur (17) selon la circulation du fluide, et ladite seconde branche (59) de l'échangeur tri-therme étant intégrée à ladite autre branche (21) du circuit en sortie dudit deuxième échangeur (15), procédé dans lequel on fait fonctionner lesdits échangeurs de chaleur (13,15,17) et lesdites première et deuxième branches (57, 59) de l'échangeur tri-therme (55), selon une ou plusieurs boucles de circulation du fluide frigorigène avec le compresseur (11).

20. Procédé de conditionnement d'air selon la revendication 19, dans lequel, dans un premier mode de fonctionnement tri-therme, on ferme l'autre branche (21) du circuit à la circulation du fluide frigorigène et ledit premier échangeur (13) fonctionne en condenseur en association avec ladite première branche (57) de l'échangeur tri-therme.

21. Procédé de conditionnement d'air selon la revendication 19, dans lequel dans un deuxième mode de fonctionnement tri-therme, on ferme l'autre branche (21) du circuit à la circulation du fluide frigorigène et ledit premier échangeur (13) fonctionne en condenseur en association avec la première branche (57) de l'échangeur tri-therme, ledit troisième échangeur (17) fonctionnant en évaporateur.

22. Procédé de conditionnement d'air selon la revendication 19, dans lequel dans un troisième mode de fonctionnement tri-therme, on ferme la branche (35) d'alimentation du troisième échangeur (17) et de même la première branche (57) de l'échangeur tri-therme, et on ouvre ladite autre branche (21) du circuit à la circulation du fluide frigorigène, ledit deuxième échangeur (15) fonctionnant en condenseur, la sortie de ce dernier alimentant la seconde branche (59) de l'échangeur tri-therme, la sortie duquel mène audit premier échangeur (13) fonctionnant en évaporateur.

23. Procédé de conditionnement d'air selon la revendication 19, dans lequel dans un quatrième mode de fonctionnement tri-therme, on ouvre la branche (35) d'alimentation du troisième échangeur (17), on ferme la première branche (57) de l'échangeur tri-therme, on ferme la première branche (19) du circuit et on ouvre l'autre branche (21) du circuit à la circulation du fluide frigorigène.

24. Procédé de conditionnement d'air selon la revendication 19, dans lequel dans un cinquième mode de fonctionnement tri-therme, on ouvre l'autre branche (21) du circuit pour alimenter en fluide frigorigène ledit deuxième échangeur (15), fonctionnant en condenseur, et alimenter la seconde branche (59) de l'échangeur tri-therme, ledit premier échangeur (13) fonctionnant en évaporateur, la branche (35) d'alimentation du troisième échangeur (17) étant fermée et la première branche (57) de l'échangeur tri-therme étant ouverte pour sortir vers le compresseur (11).

25. Procédé de conditionnement d'air selon la revendication 19, dans lequel dans un sixième mode de fonctionnement tri-therme, notamment dans le cas de températures extérieures négatives, on fait fonctionner le premier échangeur (13) en condenseur, le troisième échangeur (17) étant fermé et l'autre branche (21) du circuit étant ouverte à la circulation du fluide frigorigène pour alimenter ledit deuxième échangeur (15) fonctionnant en condenseur, le circuit étant bouclé par la première branche (57) de l'échangeur tri-therme pour revenir au compresseur (11).

26. Installation de conditionnement d'air (1) comprenant un circuit de conditionnement d'air (7) selon l'une quelconque des revendications 1 à 10.
